# FASCICULE DE BREVET EUROPEEN

(11) **EP 3 148 840 B1**
(45) Date de publication et mention de la délivrance du brevet: **10.07.2019**
(21) Numéro de dépôt: 15731647.2
(22) Date de dépôt: 27.05.2015
(51) Int. Cl.: B60P 1/02, B60P 3/08, B61D 3/18

(54) **ENSEMBLE DE VERROUILLAGE POUR LE VERROUILLAGE ET LE DEVERROUILLAGE D'UNE PALETTE SUR UNE STRUCTURE SUPPORT**
VERRIEGELUNGSVORRICHTUNG ZUM VERRIEGELN UND ENTRIEGELN EINER PALETTE AUF EINER TRAGSTRUKTUR
LOCKING ASSEMBLY FOR LOCKING AND UNLOCKING A PALLET ON A SUPPORT STRUCTURE

(30) Priorité: 27.05.2014 FR 1454779
(43) Date de publication de la demande: 05.04.2017
(73) Titulaire: Lohr Electromecanique, 67980 Hangenbieten (FR)
(72) Inventeur: SCHEER, Daniel, 67190 Still (FR)
(74) Mandataire: Merckling, Norbert
(86) Numéro de dépôt international: PCT/FR2015/051405
(87) Numéro de publication internationale: WO 2015/181502

(56) Documents cités:
- US-A- 4 597 712
- US-A- 5 525 026

## Description

### Domaine technique

La présente invention se rapporte au domaine technique général du transport de fret et notamment du transport de charges disposées sur des palettes. Ces charges sont par exemple des voitures présentant des gabarits identiques ou différents.

L'invention concerne plus particulièrement un ensemble ou un système de verrouillage d'une palette sur une structure support délimitant un espace de chargement. Un tel ensemble de verrouillage peut avantageusement équiper un véhicule routier du genre fourgon, remorque, semi-remorque, convoi articulé, un conteneur destiné à être chargé sur une semi-remorque ou un porte-conteneur ou un wagon.

Un tel système de verrouillage peut également être utilisé dans un entrepôt de stockage ou autre.

### Etat de la technique

On connaît par exemple par l'intermédiaire du document US 4,597,712 un appareil pour charger et décharger des semi-remorques. Cet appareil est monté à l'extrémité arrière d'un espace de chargement et comprend des bras articulés pour saisir latéralement un véhicule s'appuyant sur des supports de roues et déplacer l'ensemble vers une position de chargement. Les diverses opérations et mouvements sont pilotés par un opérateur agissant sur une console de commande.

Un tel appareil, outre sa complexité, présente l'inconvénient d'être commandé en continu par un opérateur. En outre, l'opérateur ne dispose pas toujours de l'ensemble des informations nécessaires à un chargement optimal, à un déchargement, à un transport optimal ou à une distribution imposant des contraintes particulières. Il peut arriver ainsi que les charges, en l'occurrence des véhicules, sont disposées, dans des positions de chargement non optimales voire dangereuses ou que le verrouillage des charges sur leur structure support n'est pas effectué ou insuffisant. Il en résulterait un manque de sécurité manifeste lors du transport, notamment au niveau de l'intégrité des charges. L'opérateur se mettrait en danger lors de la vérification du bon accrochage des charges.

Par l'intermédiaire du document US 5525026 A on connaît un dispositif permettant de stocker et/ou de transporter des marchandises de formes irrégulières, comme des véhicules et utilisant des palettes sur lesquelles reposent les véhicules. Une grue se déplaçant longitudinalement dans la remorque le long de rails transporte une palette longitudinalement et verticalement à partir d'une zone de chargement jusqu'à une position de stockage avant sélectionnée et fait pivoter la palette sur un axe non vertical, de manière à la faire passer d'une position de chargement à une position de transport. La grue comprend une commande automatique préprogrammable pouvant commander le fonctionnement de la grue et sélectionner les positions et les orientations de stockage afin d'optimiser l'utilisation de l'espace de la remorque. Une goupille télescopique prévue à chaque extrémité des palettes permet de fixer, de façon non permanente, les palettes aux parois de la remorque en orientation de stockage dans la position de stockage désirée. Dans ce but, chaque goupille est prévue pour pénétrer dans un des orifices récepteurs répartis dans les parois de la remorque. Une source lumineuse prévue derrière chaque orifice permet de s'assurer visuellement du bon engagement de chaque goupille télescopique dans un orifice récepteur.

Par sa conception, et notamment du fait qu'il utilise une grue pour la manipulation des palettes, le dispositif du document US 5525026 A ne permet pas de positionner des palettes en partie haute de l'espace de la remorque, notamment sans avoir à le modifier d'une manière qui le ferait largement dépasser du gabarit maximal autorisé en hauteur. Ce dispositif, utilisant une seule goupille prévue à chaque coin des palettes pour le verrouillage, limite le nombre de positions possibles pour les palettes aux emplacements prévus pour les orifices récepteurs répartis dans les parois de la remorque. En outre, dans le cas notamment où une goupille ne s'engagerait pas dans l'orifice récepteur prévu, la palette ne serait pas retenue correctement et serait source de danger. De même, le contrôle visuel du verrouillage de chaque goupille, en plus d'être fastidieux, volumineux, coûteux et peu fiable, peut être facilement encrassé ou détérioré et être ainsi totalement inutilisable. Ceci est de nature à altérer la fiabilité du verrouillage.

### Divulgation de l'invention

L'objet de la présente invention vise par conséquent à pallier les inconvénients de l'art antérieur en proposant un nouvel ensemble ou système de verrouillage d'une palette sur une structure support.

Un autre objet de la présente invention vise à proposer un nouvel ensemble ou système de verrouillage garantissant un verrouillage fiable d'une palette sur une structure support.

Un autre objet de la présente invention vise à fournir un nouvel ensemble ou système de verrouillage permettant d'utiliser des palettes et des structures support lesquelles ne nécessitent pas d'être alimentées directement par une source d'énergie électrique, hydraulique ou pneumatique.

Les objets assignés à l'invention sont atteints notamment à l'aide d'un ensemble de verrouillage pour immobiliser une palette sur une structure support dans une position déterminée, comportant des moyens d'activation pour activer et désactiver le verrouillage de la palette, caractérisé en ce que les moyens d'activation comprennent :
- des plots mobiles et escamotables montés coulissant dans des longerons d'une palette, lesdits plots étant aptes à s'engager dans des logements ménagés dans la structure support,
- des organes d'entraînement montés dans les longerons de la palette pour déplacer lesdits plots entre une position escamotée correspondant au déverrouillage et une position en saillie latérale sur les longerons correspondant au verrouillage, et
- des moyens d'actionnement amovibles susceptibles d'être disposés sur ou dans la palette, dans une position de coopération mécanique avec les organes d'entraînement pour commander le déplacement des plots,
plusieurs plots étant situés au voisinage de chaque extrémité des longerons, chacun de ces plots étant monté individuellement coulissant et précontraint en position saillante par l'intermédiaire d'un ressort.

Selon un exemple de réalisation de l'ensemble de verrouillage conforme à l'invention, les moyens d'actionnement sont portés par deux préhenseurs articulés sur un manipulateur automatisé, se déplaçant le long de la structure support, lesdits préhenseurs comportant des moyens d'accrochage pour saisir la palette au niveau de ses longerons longitudinaux et pour permettre au manipulateur automatisé de déplacer, orienter et déposer la palette dans une position de chargement définie sur la structure support.

Selon un exemple de réalisation de l'ensemble de verrouillage conforme à l'invention, les moyens d'actionnement sont disposés en saillie sur une face inférieure de chaque préhenseur, ladite face inférieure venant en contact avec une face supérieure d'un longeron lors de son accrochage et ledit longeron présentant une ouverture sur sa face supérieure pour recevoir lesdits moyens d'actionnement.

Selon un exemple de réalisation de l'ensemble de verrouillage conforme à l'invention, les moyens d'actionnement comportent un actionneur, du genre vérin hydraulique, présentant une tige de commande dont l'extrémité libre est apte à coopérer avec les organes d'entraînement.

Selon un exemple de réalisation de l'ensemble de verrouillage conforme à l'invention, les plots sont montés dans un bloc, lequel est monté coulissant entre une position de verrouillage et de déverrouillage et inversement et ce au voisinage de chaque extrémité des longerons.

Selon un exemple de réalisation de l'ensemble de verrouillage conforme à l'invention, les organes d'entraînement comprennent une chape mobile taraudée en translation dans le longeron et engagée sur le filetage d'un arbre de liaison traversant la chape et s'étendant de chaque côté de ladite chape et dans le sens de déplacement de ladite chape, un mouvement de translation de la chape se transformant en un mouvement de rotation de l'arbre de liaison, un logement d'ancrage ménagé dans la chape et destiné à recevoir l'extrémité libre de la tige de commande, ladite chape se déplaçant ainsi sous l'action de la tige, ledit arbre de liaison présentant des extrémitées portant chacune une came, solidaire en rotation avec ledit arbre de liaison et reliée cinématiquement à des plots pour transformer un mouvement de rotation de l'arbre de liaison en un mouvement de translation desdits plots.

Selon un exemple de réalisation de l'ensemble de verrouillage conforme à l'invention, chaque came est solidaire en rotation de l'arbre de liaison et articulée sur un bloc.

Selon un autre exemple de réalisation de l'ensemble de verrouillage conforme à l'invention, les organes d'entraînement comprennent une chape mobile en translation dans le longeron et reliée à au moins une bielle de commande s'étendant de chaque côté de ladite chape dans le sens de déplacement de ladite chape, un mouvement de translation de la chape entraînant ainsi en translation ladite bielle de commande, un logement d'ancrage ménagé dans la chape et destiné à recevoir l'extrémité libre de la tige de commande, ladite chape se déplaçant ainsi sous l'action de la tige de commande, ladite bielle de commande présentant des extrémitées portant chacune un organe de guidage, solidaire en translation avec ladite bielle de commande et reliée cinématiquement à des plots pour transformer le mouvement de translation de l'organe de guidage en déplacement desdits plots selon une direction orthogonale au dit mouvement de translation.

Selon un exemple de réalisation de l'ensemble de verrouillage conforme à l'invention, chaque plot est monté individuellement coulissant et précontraint dans une position saillante du bloc par l'intermédiaire d'un ressort, de manière à comprimer ledit ressort lorsque le bloc se déplace vers sa position de verrouillage en saillie du longeron et lorsque le plot correspondant vient en butée sur la structure support.

Selon un exemple de réalisation de l'ensemble de verrouillage conforme à l'invention, les moyens d'accrochage comprennent :
- un plot de centrage en saillie sur la face inférieure du préhenseur, prévu pour s'engager dans un orifice de centrage ménagé sur la face supérieure d'un longeron, et
- deux verrous d'accrochage, du genre verrous tournants ou « twist lock », situés de part et d'autre du plot de centrage et entraînés par l'intermédiaire d'un actionneur et d'une bielle intégrés au préhenseur, pour pivoter lesdits verrous d'une orientation de libération à une orientation de verrouillage de la palette et inversement, lesdits verrous étant destinés à s'engager dans des ouvertures d'accrochage ménagées dans la face supérieure du longeron,

Selon un exemple de réalisation de l'ensemble de verrouillage conforme à l'invention, le préhenseur comprend un capteur inductif permettant de détecter le contact de la face supérieure du longeron avec la face inférieure du préhenseur lorsque le plot de centrage est engagé complètement dans l'orifice de centrage.

Selon un exemple de réalisation de l'ensemble de verrouillage conforme à l'invention, les moyens d'accrochage comprennent au niveau de chaque verrou d'accrochage du préhenseur, un capteur d'effort pour vérifier à l'amorçage du soulèvement de la palette par les préhenseurs, que chaque verrou dans son orientation de verrouillage est bien accroché au longeron correspondant.

Selon un exemple de réalisation de l'ensemble de verrouillage conforme à l'invention, chaque capteur d'effort comprend un détecteur de proximité à sortie analogique associé à un système de rondelles Belleville dont la compression en fonction de la charge soulevée par un préhenseur, génère un déplacement relatif entre une cible portée par le système de rondelles Belleville et le détecteur de proximité, l'amplitude du signal en sortie dudit détecteur de proximité étant dépendant de la masse soulevée.

Selon un exemple de réalisation conforme à l'invention, les moyens d'actionnement sont disposés et dimensionnés pour être reçus intégralement dans les longerons.

Les objets assignés à l'invention sont également atteints à l'aide d'un système de chargement et de stockage équipé d'une structure support destinée à stocker des palettes chargées ou non, d'un manipulateur comportant des préhenseurs permettant de saisir, de déplacer, d'orienter et de déposer les palettes dans des positions déterminées sur la structure support, ledit système de chargement et de stockage comprenant un ensemble de verrouillage tel que présenté ci-dessus.

Les objets assignés à l'invention sont également atteints à l'aide d'un véhicule routier ou ferroviaire ou container équipé d'une structure support destinée à stocker et à transporter des palettes chargées ou non, d'un manipulateur comportant des préhenseurs permettant de saisir, de déplacer, d'orienter et de déposer les palettes dans des positions déterminées sur la structure support, ledit véhicule comprenant un ensemble de verrouillage tel que présenté ci-dessus.

Un avantage du dispositif de verrouillage conforme à l'invention, réside dans son niveau élevé d'automatisation à l'instar des opérations de chargement et de déchargement.

Un autre avantage de l'ensemble de verrouillage conforme à l'invention, réside dans une prise en compte d'un grand nombre de données liées par exemple à des contraintes de transport, de poids des charges et à un degré de fiabilité du verrrouillage obtenu pour assurer une sécurité de verrouillage suffisante pour le transport desdites charges. Des alertes automatiques peuvent ainsi être générées par le dispositif lorsqu'un ou plusieurs points de verrouillage sont défaillants.

Un autre avantage de l'ensemble de verrouillage conforme à l'invention, réside dans un gain de temps substantiel lors des opérations de chargement et de déchargement. En effet, l'automatisation de ces opérations y compris celles se rapportant au verrouillage et au déverrouillage des palettes, permet à l'opérateur, par exemple lors du chargement de voitures, à aller chercher une autre voiture à charger, pendant que l'automate procède au placement automatisé d'une voiture dans sa position de chargement. Un gain de temps similaire est observé lors des opérations de déchargement. Le verrouillage et le déverrouillage se faisant automatiquement et en temps masqué n'affectent donc pas négativement, en durée, le chargement et le déchargement d'un véhicule.

Un avantage de l'ensemble de verrouillage conforme à l'invention réside dans la grande fiabilité et dans un niveau élevé de sécurité qu'il procure et ce malgré un degré élevé d'automatisation.

Un autre avantage de l'ensemble de verrouillage conforme à l'invention réside dans le fait qu'il s'adapte à tout type de charges supportées par les palettes ainsi qu'à tout type de véhicules routiers ou ferroviaires.

Un autre avantage de l'invention réside dans l'absence d'apport d'énergie, électrique, hydraulique ou pneumatique à la structure support et à la palette, pour les opérations de verrouillage et de déverrouillage. La conception et la construction de la palette d'une part et de la structure support d'autre part s'en trouvent par conséquent simplifiées.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
- la figure 1 est une vue en perspective d'un exemple de réalisation d'un véhicule pouvant être chargé et déchargé en utilisant des palettes supportant, lesquelles sont verrouillées et déverrouillées sur une structure support grâce à un ensemble de verrouillage conforme à l'invention,
- la figure 2 est une représentation schématique, en vue de dessus, d'un exemple de réalisation d'une palette de chargement vide, destinée à être verrouillée et déverrouillée sur une structure support grâce à un ensemble de verrouillage conforme à l'invention,
- la figure 3 représente en perspective un exemple de réalisation d'un préhenseur positionné en regard d'une palette à saisir, lequel intègre une partie des éléments constitutifs de l'ensemble de verrouillage conforme à l'invention,
- la figure 4 représente en perspective un exemple de réalisation du préhenseur de palettes de la figure 3,
- la figure 5 représente en coupe longitudinale, le préhenseur de la figure 3,
- la figure 6 représente, selon une vue de dessus partielle, un exemple de réalisation du préhenseur de la figure 3,
- les figures 7 et 8 illustrent partiellement et en perspective un préhenseur fixé à une palette, avec un ensemble de verrouillage conforme à l'invention respectivement dans un état de déverrouillage et dans un état de verrouillage,
- la figure 9, représente en coupe, un détail A agrandi de la figure 4,
- les figures 10 et 11 illustrent partiellement et en coupe un plot de verrouillage d'un ensemble de verrouillage conforme à l'invention, intégré dans une palette et respectivement dans un état de déverrouillage et dans un état de verrouillage,
- la figure 12 illustre partiellement et en coupe un plot de verrouillage d'un ensemble de verrouillage conforme à l'invention, intégré dans un positionnement en butée sur la structure support empêchant un verrouillage par ledit plot,
- la figure 13 illustre selon une vue en perspective un autre exemple de réalisation de l'ensemble de verrouillage conforme à l'invention, et
- les figures 14 et 15 illustrent selon des vues partielles en coupe, respectivement un état de verrouillage et un état de déverrouillage de l'ensemble de verrouillage de la figure 13.

### Mode(s) de réalisation de l'invention

Les éléments structurellement et fonctionnellement identiques et présents sur plusieurs figures distinctes, sont affectés d'une même référence numérique ou alphanumérique.

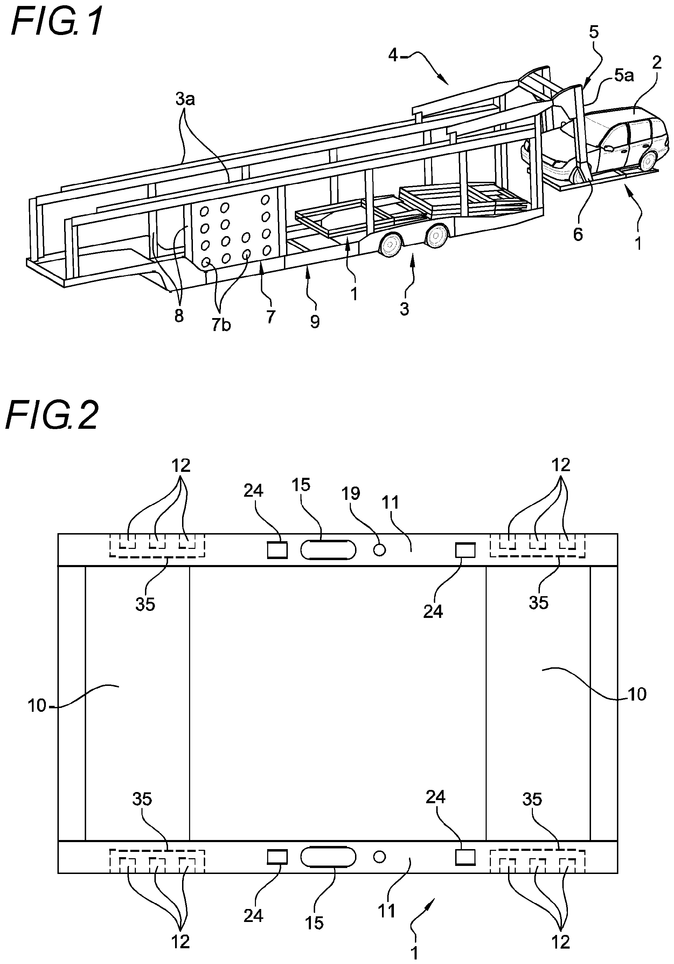

La figure 1 illustre une phase de chargement dans laquelle une palette 1 supporte une charge 2, en l'occurrence une voiture, lors d'un chargement sur un véhicule, par exemple une semi-remorque 3.

La palette 1 chargée est déplacée par l'intermédiaire d'un manipulateur 5 motorisé lequel saisit la palette 1 par l'intermédiaire de deux préhenseurs 6. Le manipulateur 5 comporte de préférence deux bras latéraux 5a se terminant chacun par un préhenseur 6. La palette 1 est par conséquent saisie ou accrochée via le préhenseur 6 sur chacun de ses côtés latéraux et plus précisément sur chacun de ses longerons 11 longitudinaux.

Un charriot 4 portant le manipulateur 5 se déplace sur des rails de guidage 3a s'étendant le long et de part et d'autre d'un espace de chargement délimité dans la semi-remorque 3. Le charriot 4 permet ainsi de déplacer le manipulateur 5 et par conséquent la palette 1 dans l'espace de chargement.

Les bras latéraux 5a sont avantageusement télescopiques et articulés sur le charriot 4 et les préhenseurs 6 sont quant à eux articulés sur les extrémités inférieures desdits bras latéraux 5a.

Le manipulateur 5 permet ainsi d'une part de déplacer la palette 1 dans une direction verticale et dans une direction horizontale et d'autre part de modifier via les préhenseurs 6, l'orientation de la palette 1.

Le déplacement et l'orientation de la palette 1 sont obtenus notamment par l'intermédiaire d'actionneurs, du genre vérins hydrauliques lesquels ne seront pas décrits plus en détails dans la présente. Il est également envisageable d'utiliser des actionneurs électriques ou pneumatiques.

La semi-remorque 3 présente avantageusement sur ses côtés latéraux, des parois latérales constituant une structure support 7, laquelle est pourvue de logements 7b. La structure support 7 délimitant l'espace de chargement n'est que partiellement représentée à la figure 1 pour des raisons de simplifications. La structure support 7 s'étend avantageusement entre les montants 8 reliant une base 9 de la semi-remorque 3 aux rails longitudinaux 3a.

La figure 2 est une représentation schématique en vue de dessus, d'un exemple de réalisation d'une palette 1. La palette 1 est à titre d'exemple particulièrement adaptée aux transports de voitures. La palette 1 comporte à cet effet deux zones d'extrémités longitudinales 10 destinées à supporter les roues d'une voiture. Les zones d'extrémités 10 longitudinales sont reliées entre elles par l'intermédiaire des longerons 11.

La palette 1 comporte également des plots 12 mobiles et escamotables. Les plots 12 sont montés coulissants dans les longerons 11 de la palette 1 et sont aptes à s'engager dans les logements 7b ménagés dans la structure support 7.

Les plots 12 sont disposés au voisinage de chaque extrémité longitudinale des longerons 11, de manière à constituer les éléments de verrouillage aux dites extrémités. Avantageusement chaque zone d'extrémité d'un longeron 11 est pourvu de trois plots 12, lesquels sont prévus pour être déplacés entre une position escamotée dans le longeron 11, correspondant au déverrouillage de la palette 1 et une position (non représentée sur cette figure) en saillie latérale sur les longerons 11 correspondant au verrouillage de ladite palette 1.

Les plots 12 sont préférentiellement au nombre de trois au niveau de chaque zone d'extrémité d'un longeron 11, bien que ce nombre puisse être égal à deux, ou supérieur à trois. Avoir ainsi plusieurs plots 12 au niveau de chaque zone d'extrémité d'un longeron 11 présente plusieurs avantages.

Tout d'abord, cette multiplicité de plots 12 permet un positionnement plus fin pour chaque palette 1 pour un nombre déterminé de logements 7b ménagés dans la structure support 7. Ainsi, pour un même nombre de logements 7b, le fait d'avoir plusieurs plots 12 multiplie d'autant le nombre de positions et d'orientations possibles pour chaque palette 1.

Ensuite, cette multiplicité de plots 12 procure une meilleure sécurité pour l'ensemble, car la fourniture de plusieurs plots 12 au niveau de chaque zone d'extrémité d'un longeron 11 permet d'augmenter les chances qu'au moins un de ces plots 12 situés à chaque extrémité des longerons s'engage dans un logement 7b lors du verrouillage de la palette 1. En effet, par exemple en cas de déformation d'une palette ou de la structure support 7, il peut arriver qu'en position de verrouillage d'une palette, le plot 12 prévu pour s'engager dans un logement 7b ne soit pas en face de celui-ci, mais qu'un autre plot 12 soit alors apte à s'engager dans celui-ci grâce à l'invention.

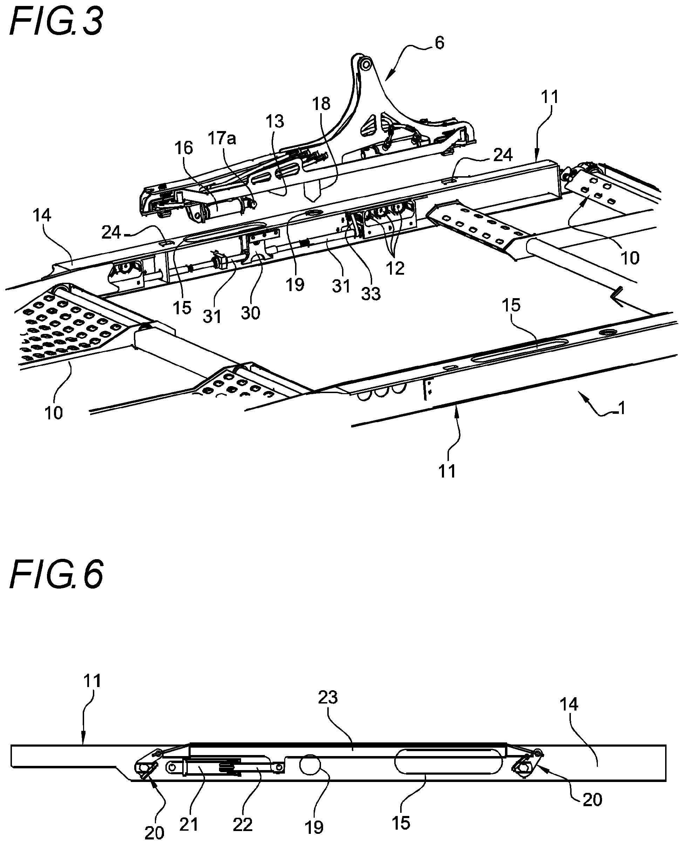

La figure 3 représente en perspective un exemple de réalisation d'un préhenseur 6 positionné en regard d'une palette 1 à saisir.

La palette 1 intègre avantageusement une partie des éléments constitutifs d'un ensemble de verrouillage permettant d'immobiliser la palette 1 sur la structure support 7. Chaque longeron 11 comporte à cet effet des organes d'entrainement permettant de déplacer les plots 12.

L'ensemble de verrouillage conforme à l'invention comprend également des moyens d'actionnement amovibles, disposés dans ou sur la palette 1, dans une position de coopération mécanique avec les organes d'entrainement. Les moyens d'actionnement permettent ainsi de commander le déplacement des plots 12. Les moyens d'actionnement sont avantageusement portés par les préhenseurs 6.

Les préhenseurs 6 comportent également des moyens d'accrochage pour saisir la palette 1 au niveau des longerons 11. L'accrochage ainsi effectué permet au manipulateur 5 motorisé et le cas échéant automatisé, de déplacer, d'orienter et de déposer la palette 1 dans une position de chargement définie sur la structure support 7.

Le préhenseur 6 représenté notamment aux figures 3, 4 et 5 porte donc avantageusement les moyens d'actionnement. Ces derniers sont au moins en partie disposés en saillie sur la face inférieure 13 du préhenseur 6.

La face inférieure 13 est destinée à venir en contact avec une face supérieure 14 du longeron 11 lors de l'accrochage du préhenseur 6 sur ledit longeron 11. La face supérieure 14 présente à cet effet avantageusement une ouverture 15 pour recevoir les moyens d'actionnement lorsque la palette 1 est accrochée au préhenseur 6. Les moyens d'actionnement s'étendent donc au moins en partie à l'intérieur du longeron 11.

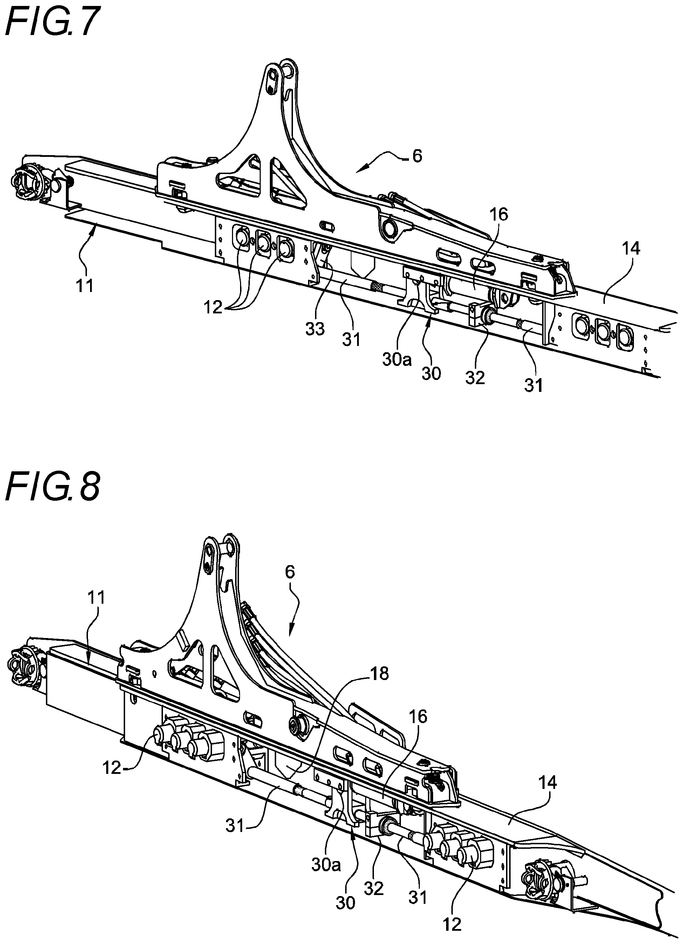

Selon un mode de réalisation préféré de l'invention, les moyens d'actionnement sont avantageusement reçus entièrement dans l'ouverture 15 sur chaque longeron 11, comme cela apparaît sur les figures 7 et 8. Cette caractéristique permet de diminuer la distance qui existe entre les préhenseurs 6 et les palettes 1, ce qui permet notamment de positionner les palettes 1 en hauteur tout en réduisant au minimum l'espace vide nécessaire au-dessus de la semi-remorque 3 lors de cette opération.

De même, le fait que les moyens d'actionnement soient entièrement reçus dans chaque longeron 11 leur permet d'exercer leur couple directement sur les organes d'entrainement qui déplacent les plots 12, sans liaison mécanique intermédiaire, ce qui offre plus de fiabilité et de puissance à l'ensemble.

Les moyens d'actionnement comportent avantageusement un actionneur 16 électrique ou du genre vérin hydraulique ou pneumatique. L'actionneur 16 présente une tige 17 dont l'extrémité libre à 17a est apte à opérer avec les organes d'entrainement.

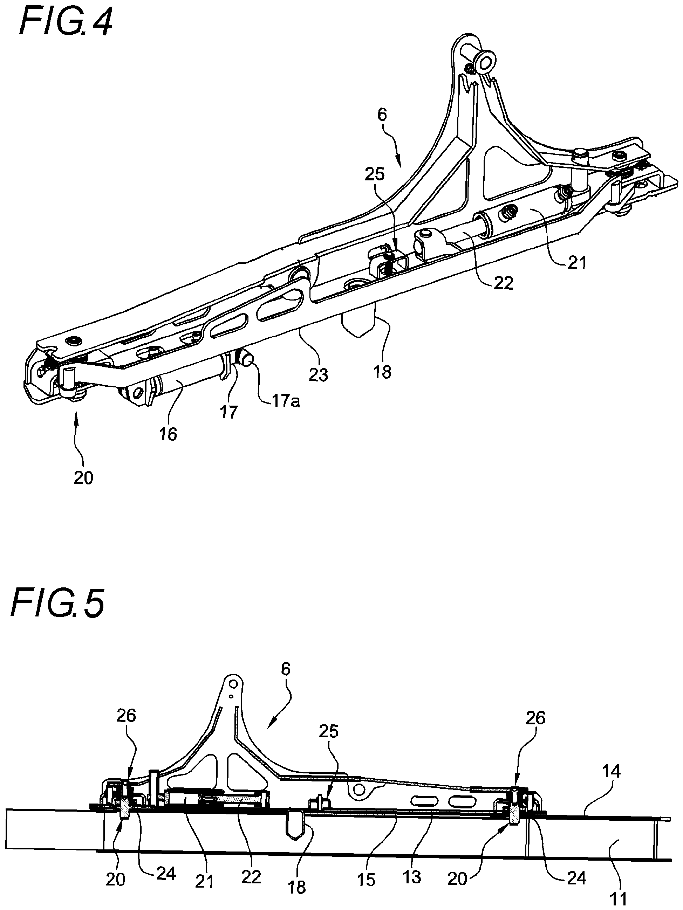

Les moyens d'accrochage sont décrits plus en détails à l'aide notamment des figures 5 et 6.

La figure 5 représentant une vue en coupe du préhenseur 6 permet de visualiser les moyens d'accrochage. Ces derniers sont également montrés dans leur positionnement relatif par rapport au longeron 11 à la figure 6.

Les moyens d'accrochage comprennent un plot de centrage 18 en saillie sur la face inférieure 13 du préhenseur 6. Ce plot de centrage 18 est prévu pour s'engager dans un orifice de centrage 19 ménagé dans la face supérieure 14 du longeron 11 lors de l'accrochage de la palette 1 au préhenseur 6.

Les moyens d'accrochage comprennent également deux verrous tournants 20 (appelés également verrous « twist lock ») lesquels sont situés de part et d'autre du plot de centrage 18.

Les moyens d'accrochage comprennent également un actionneur d'accrochage 21 logé dans le préhenseur 6. L'actionneur d'accrochage 21, du genre vérin hydraulique, comporte une tige 22 reliée à une bielle 23. Cette dernière relie entre eux les verrous tournants 20 de manière à les faire pivoter d'une orientation de libération de la palette 1 à une orientation de verrouillage de la palette 1 et inversement sous l'action de la tige 22.

Les verrous tournants 20 sont destinés à s'engager dans des ouvertures d'accrochage 24 ménagées dans la face supérieure 14 du longeron 11.

La forme des verrous tournants 20 est choisie en complémentarité de forme avec les ouvertures d'accrochage 24, de manière à solidariser le longeron 11 du préhenseur 6 lorsque lesdits verrous tournants 20 sont dans une orientation de verrouillage. Inversement lorsque les verrous tournants 20 sont dans leur orientation de libération, la complémentarité des formes desdits verrous 20 et des orifices d'accrochage 24 permettent au préhenseur 6 de se libérer du longeron 11.

Avantageusement, le préhenseur 6 comporte un capteur inductif 25 pour détecter le contact de la face supérieure 14 du longeron 11 avec la face inférieure 13 du préhenseur 6 lorsque le plot de centrage 18 est engagé complètement dans l'orifice de centrage 19.

Selon un exemple de réalisation préférentiel de l'ensemble de verrouillage conforme à l'invention, les moyens d'accrochage comprennent également au niveau de chaque verrou tournant 20 un capteur d'effort 26. Ce capteur d'effort 26 permet de déterminer à l'amorçage d'un soulèvement de la palette 1 par les préhenseurs 6, illustré par la flèche 20a, si l'accrochage est effectué correctement. Le capteur d'effort 26 peut ainsi détecter lorsque les verrous tournants 20 sont dans leur orientation de verrouillage que le longeron 11 est bien accroché auxdits verrous tournants 20.

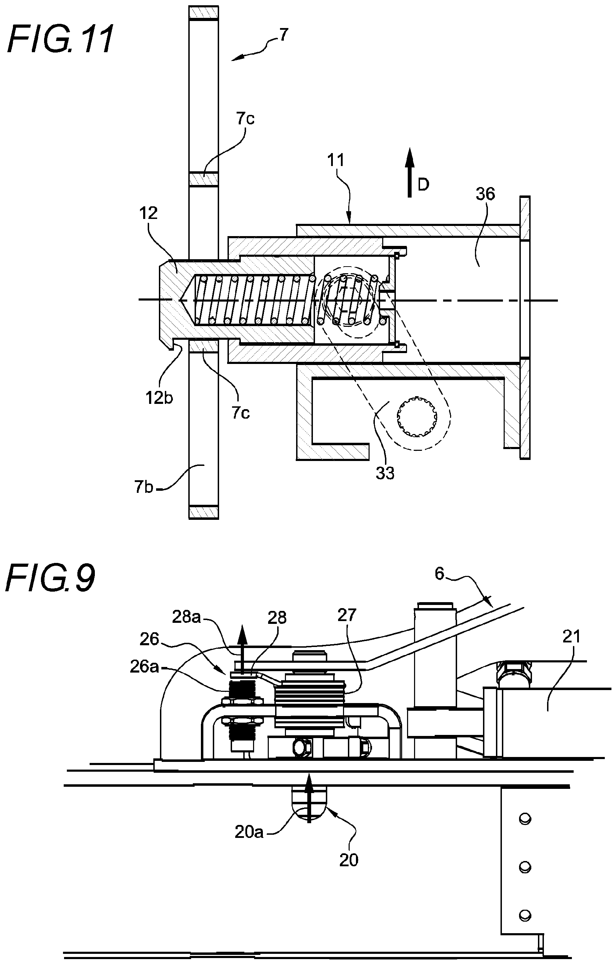

Chaque capteur d'effort 26 est avantageusement réalisé avec un détecteur de proximité 26a. Ce dernier, présentant une sortie analogique, est associé à un système de rondelles Belleville 27 dont la compression en fonction de la charge soulevée par les préhenseurs 6 génère un déplacement relatif entre une cible 28 portée par le système de rondelles Belleville et ledit détecteur de proximité 26a. L'amplitude du signal en sortie du détecteur de proximité est alors dépendante de la masse soulevée. Le déplacement de la cible 28 est schématisé par exemple par la flèche 28a à la figure 9.

L'utilisation de capteurs d'effort 26, dits intelligents, permet par exemple de déterminer la masse soulevée, de calculer le centre de gravité de la charge soulevée, de calculer la charge totale transportée, de calculer le centre de gravité du chargement ainsi que la charge par essieu. L'opérateur peut vérifier ainsi que la charge maximale par essieu n'est pas dépassée.

Des moyens électroniques et informatiques sont avantageusement associés aux capteurs d'effort 26 à cet effet. Les diverses informations délivrées par les capteurs d'efforts 26 ainsi que les calculs s'y rapportant peuvent avantageusement être enregistrés dans une « boîte noire » à des fins de contrôles ultérieurs.

Les organes d'entrainement de l'ensemble de verrouillage conformément à l'invention sont représentés plus particulièrement aux figures 3, 7 et 8.

Les organes d'entrainement comprennent une chape 30 montée mobile en translation dans le longeron 11. La chape 30 est apte à coulisser dans le longeron 11.

La chape 30 présente avantageusement un logement d'ancrage 30a destiné à recevoir l'extrémité libre 17a de la tige 17 de l'actionneur 16.

Les moyens d'entrainement comprennent également un arbre de liaison 31, fileté, traversant la chape 30 taraudée. L'arbre de liaison 31 présente ainsi un filetage engagé dans le taraudage de la chape 30 de manière à transformer un mouvement de translation de la chape 30 en un mouvement de rotation dudit arbre de liaison 31. L'arbre de liaison 31 est avantageusement maintenu par au moins un palier 32 solidaire du longeron 11 et pourvu d'une bague ou d'un roulement.

L'arbre de liaison 31 comporte à chaque extrémité une came 33 reliée cinématiquement à des plots 12 pour transformer un mouvement de rotation dudit arbre de liaison 31 en un mouvement de translation desdits plots 12.

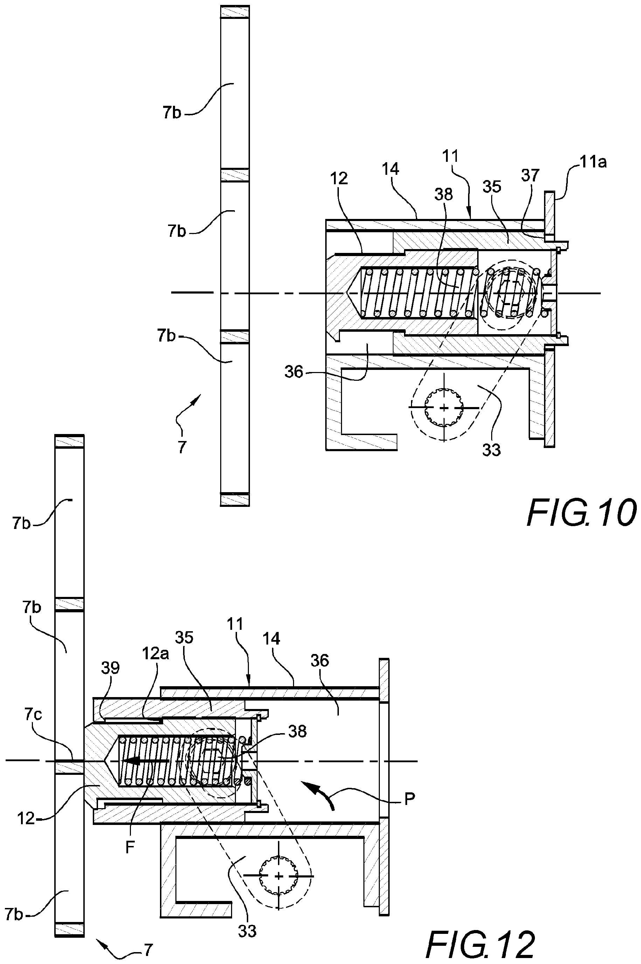

Les plots 12, représentés par exemple plus en détails aux figures 10, 11 et 12, sont avantageusement montés dans un bloc 35 lequel est monté coulissant dans le longeron 11. Le bloc 35 coulisse ainsi transversalement dans le longeron 11, entre une position de verrouillage et une position de déverrouillage et inversement.

La palette 1 comporte des blocs 35 qui sont localisés aux quatre extrémités longitudinales de la palette 1. Chaque bloc 35 comportant par exemple trois plots 12 est avantageusement monté coulissant dans une chambre de coulissement 36 spécifiquement prévue dans le longeron 11.

Chaque came 33, solidaire en rotation de l'arbre de liaison 31 et articulée sur un bloc 35, commande ainsi le déplacement transversal dudit bloc 35.

A la figure 10, le bloc 35 est maintenu dans une position de déverrouillage par l'intermédiaire de la came 33. Dans cette position de déverrouillage, une butée interne 37 du bloc 35 est en appui contre une face interne 11a du longeron 11.

Le plot 12 est monté individuellement coulissant et précontraint dans une position saillante hors du bloc 35 par l'intermédiaire d'un ressort 38. Ce dernier permet ainsi au plot 12 de rester en saillie sur le bloc 35 dans une position correspondant à un appui d'un bord périphérique 12a sur une butée interne 39 du bloc 35. Ce positionnement relatif entre le plot 12 et le bloc 35 est conservé lorsque ledit plot 12 se trouve dans une état ou une position de verrouillage dans laquelle il est engagé dans un logement 7b de la structure support 7, tel que cela est représenté par exemple à la figure 11.

A titre d'exemple, le plot 12 présente à son extrémité libre un rebord de sécurité 12b. Ce dernier est localisé de préférence vers le bas de l'extrémité libre du plot 12 de manière à venir éventuellement en butée contre une partie fixe 7c de la structure support 7 lorsque ledit plot 12 est engagé dans un logement 7b. On évite ainsi tout dégagement du plot 12 du logement 7b résultant éventuellement d'une défaillance de l'ensemble de verrouillage. L'immobilisation de la palette 1 sur la structure support 7 est ainsi d'avantage sécurisée. Il convient alors de soulever légèrement la palette 1 selon une direction illustrée schématiquement par la flèche D à la figure 11, pour libérer le rebord de sécurité 12b au préalable d'un déplacement des plots 12 dans la position de déverrouillage.

La figure 12 illustre partiellement et en coupe un plot 12 dans un positionnement en butée sur la partie fixe 7c de la structure support 7. Une telle situation empêche le plot 12 de s'engager dans un logement 7b et génère la compression du ressort 39.

Ainsi, lorsque le bloc 35 se déplace vers une position de verrouillage à l'extérieur du longeron 11, ce mouvement n'est pas empêché par un éventuel mauvais positionnement de l'un des plots 12 par rapport à un logement 7b donné. Le montage individuel des plots 12 dans le bloc 35 permet à d'autres plots 12 de s'engager dans un logement 7b correspondant.

A la figure 12, la flèche P schématise le mouvement de pivotement de la came 33 entrainant le bloc 35 vers sa position de verrouillage. La flèche F schématise la force exercée par le ressort 38 sur le plot 12 lequel se trouve escamoté dans le bloc 35 presque en totalité.

Une telle situation n'empêche pas par conséquent l'immobilisation et le verrouillage de la palette sur la structure support 7. Il suffit qu'un seul plot 12 de chaque bloc 35 soit engagé dans un logement 7b pour assurer le verrouillage de la palette 1.

Avantageusement un capteur de position associé à chaque plot 12, permet de détecter, et de dénombrer le nombre de plots 12 venant en butée sur un obstacle et ne participant pas au verrouillage de la palette 1. Il devient possible alors de détecter le nombre de plots 12 se trouvant par exemple dans un état grippé et ne participant pas au verrouillage. En outre, le nombre de plots 12 inactifs peut être contrôlé en continu lors d'une phase de roulement. Des informations relatives à la maintenance peuvent alors être générées.

Un déplacement automatique vers une autre position de verrouillage de la palette 1 peut le cas échéant être commandé.

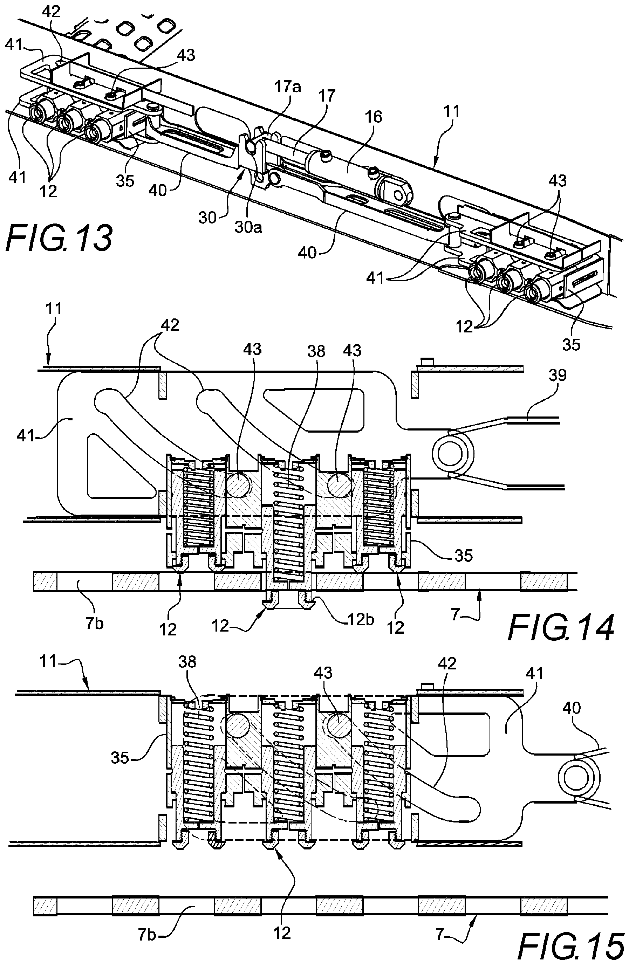

Dans l'exemple de réalisation illustré aux figures 13, 14 et 15, la chape 30, mobile en translation dans le longeron 11, est reliée à au moins une bielle de commande 40 s'étendant de chaque côté et dans la direction de déplacement de ladite chape 30. Un mouvement de translation de la chape 30 entraîne alors en translation la bielle de commande 40.

Le logement d'ancrage 30a ménagé dans la chape 30 est destiné à recevoir l'extrémité libre 17a de la tige de commande 17. La chape 30 se déplace ainsi sous l'action de la tige de commande 17.

La bielle de commande 40 présente à chacune de ses extrémités, un organe de guidage 41, solidaire en translation avec la bielle de commande 40 et reliée cinématiquement à des plots 12 pour transformer le mouvement de translation de l'organe de guidage 41 en déplacement desdits plots 12, orthogonal au dit mouvement de translation.

L'organe de guidage 41 comprend une plaque supérieure et une plaque de guidage inférieure susceptibles de coulisser respectivement sur et sous le bloc 35. Chaque plaque de guidage est pourvue de fentes 42 obliques, dans lesquelles coulissent des ergots 43 en saillie sur et sous chaque bloc 35. Les fentes 42 obliques présentent avantageusement une forme légèrement incurvée à une ou aux deux extrémités de manière à marquer les positions d'extrémités de course des ergots 43 et à immobiliser le bloc 35 en position.

Le coulissement de l'organe de guidage 41 dans le longeron 11 permet donc de déplacer transversalement au dit longeron 11, le bloc 35. Le bloc 35 coulisse ainsi latéralement entre une position de verrouillage illustrée par exemple à la figure 14 et une position de déverrouillage illustrée par exemple à la figure 15, et inversement. Les déplacements des blocs 35 et des plots 12 correspondent aux déplacements décrits plus en détails aux figures 10 à 12, permettant d'obtenir un verrouillage et un déverrouillage de la palette 1 sur des parois 7.

Des moyens électroniques et informatiques sont avantageusement intégrés à l'ensemble de verrouillage conforme à l'invention pour assister tout mouvement et fonctionnement de ses éléments constitutifs. Ces moyens électroniques et informatiques permettent notamment de gérer les signaux issus des capteurs inductifs et des capteurs de proximité.

L'ensemble de verrouillage conforme à l'invention présente ainsi une très grande sécurité de fonctionnement dans la mesure où tout positionnement suspect d'un plot 12 de verrouillage est détecté et corrigé le cas échéant de façon automatique.

## Revendications

1. Ensemble de verrouillage pour immobiliser une palette (1) sur une structure support (7), dans une position déterminée, ledit ensemble comportant des moyens d'activation pour activer et désactiver le verrouillage de la palette (1), **caractérisé en ce que** les moyens d'activation comprennent :
- des plots (12) mobiles et escamotables montés coulissant dans des longerons (11) d'une palette (1), lesdits plots (12) étant aptes à s'engager dans des logements (7b) ménagés dans la structure support (7),
- des organes d'entraînement montés dans les longerons (11) de la palette (1) pour déplacer lesdits plots (12) entre une position escamotée correspondant au déverrouillage et une position en saillie latérale sur les longerons (11) correspondant au verrouillage, et
- des moyens d'actionnement amovibles, susceptibles d'être disposés sur ou dans la palette (1), dans une position de coopération mécanique avec les organes d'entraînement pour commander le déplacement des plots (12),
et **en ce que** plusieurs plots (12) sont situés au voisinage de chaque extrémité des longerons (11), chacun de ces plots étant monté individuellement coulissant et précontraint en position saillante par l'intermédiaire d'un ressort.

2. Ensemble selon la revendication 1, **caractérisé en ce que** les moyens d'actionnement sont portés par deux préhenseurs (6), articulés sur un manipulateur automatisé se déplaçant le long de la structure support (7), lesdits préhenseurs (6) comportant des moyens d'accrochage pour saisir la palette (1) au niveau de ses longerons (11) longitudinaux et pour permettre au manipulateur automatisé de déplacer, orienter et déposer la palette (1) dans une position de chargement définie sur la structure support (7).

3. Ensemble selon la revendication 2, **caractérisé en ce que** les moyens d'actionnement sont disposés en saillie sur une face inférieure (13) de chaque préhenseur (6), ladite face inférieure (13) venant en contact avec une face supérieure (14) d'un longeron (11) lors de son accrochage et ledit longeron (11) présentant une ouverture (15) sur sa face supérieure (14) pour recevoir lesdits moyens d'actionnement.

4. Ensemble selon la revendication 3, **caractérisé en ce que** les moyens d'actionnement comportent un actionneur (16), du genre vérin hydraulique, présentant une tige de commande (17) dont l'extrémité libre (17a) est apte à coopérer avec les organes d'entraînement.

5. Ensemble selon l'une quelconque des revendications 1 à 4, **caractérisé en ce que** les moyens d'actionnement sont disposés et dimensionnés pour être reçus intégralement dans les longerons (11).

6. Ensemble selon l'une quelconque des revendications 1 à 5, **caractérisé en ce que** les plots (12) sont montés dans un bloc (35), lequel est monté coulissant entre une position de verrouillage et de déverrouillage et inversement et au voisinage de chaque extrémité des longerons (11).

7. Ensemble selon la revendication 5, **caractérisé en ce que** les organes d'entraînement comprennent une chape (30) mobile et taraudée, en translation dans le longeron (11) et engagée sur le filetage d'un arbre de liaison (31) traversant la chape (30) et s'étendant de chaque côté de ladite chape (30) dans le sens de déplacement de ladite chape (30), un mouvement de translation de la chape (30) se transformant ainsi en un mouvement de rotation de l'arbre de liaison (31), un logement d'ancrage (30a) ménagé dans la chape (30) et destiné à recevoir l'extrémité libre (17a) de la tige de commande (17), ladite chape (30) se déplaçant ainsi sous l'action de la tige de commande (17), ledit arbre de liaison (31) présentant des extrémités portant chacune une came (33), solidaire en rotation avec ledit arbre de liaison (31) et reliée cinématiquement à des plots (12) pour transformer un mouvement de rotation de l'arbre de liaison (31) en un mouvement de translation transversale desdits plots (12).

8. Ensemble selon la revendication 7, **caractérisé en ce que** chaque came (33) est solidaire en rotation de l'arbre de liaison (31) et articulée sur un bloc (35) portant des plots (12).

9. Ensemble selon la revendication 6, **caractérisé en ce que** les organes d'entraînement comprennent une chape (30) mobile en translation dans le longeron (11) et reliée à au moins une bielle de commande (40) s'étendant de chaque côté de ladite chape (30) dans le sens de déplacement de ladite chape (30), un mouvement de translation de la chape (30) entraînant ainsi en translation ladite bielle de commande (40), un logement d'ancrage (30a) ménagé dans la chape (30) étant destiné à recevoir l'extrémité libre (17a) de la tige de commande (17), ladite chape (30) se déplaçant ainsi sous l'action de la tige de commande (17), ladite bielle de commande (40) présentant des extrémités portant chacune un organe de guidage (41), solidaire en translation avec ladite bielle de commande (40) et reliée cinématiquement à des plots (12) pour transformer le mouvement de translation de l'organe de guidage (41) en déplacement desdits plots (12) selon une direction orthogonale au dit mouvement de translation.

10. Ensemble selon l'une quelconque des revendications 6 à 9, **caractérisé en ce que** chaque plot (12) est monté individuellement coulissant et précontraint dans une position saillante du bloc (35) par l'intermédiaire d'un ressort, de manière à comprimer ledit ressort lorsque le bloc (35) se déplace vers sa position de verrouillage en saillie latérale du longeron (11) et lorsque le plot (12) correspondant vient en butée sur la structure support (7).

11. Ensemble selon la revendication 2, **caractérisé en ce que** les moyens d'accrochage comprennent :
- un plot de centrage (18) en saillie sur la face inférieure (13) du préhenseur (6), prévu pour s'engager dans un orifice de centrage (19) ménagé sur la face supérieure (14) d'un longeron (11), et
- deux verrous d'accrochage (20), du genre verrous tournants ou « twist lock », situés de part et d'autre du plot de centrage (18) et entraînés par l'intermédiaire d'un actionneur (21) et d'une bielle (23) intégrés au préhenseur (6), pour pivoter lesdits verrous d'accrochage (20) d'une orientation de libération à une orientation de verrouillage de la palette (1) et inversement, lesdits verrous d'accrochage (20) étant destinés à s'engager dans des ouvertures d'accrochage (24) ménagées dans la face supérieure (14) du longeron (11).

12. Ensemble selon la revendication 11, **caractérisé en ce que** le préhenseur (6) comprend un capteur inductif (25) permettant de détecter le contact de la face supérieure (14) du longeron (11) avec la face inférieure (13) du préhenseur (6) lorsque le plot de centrage (18) est engagé complètement dans l'orifice de centrage (19).

13. Ensemble selon la revendication 11 ou 12, **caractérisé en ce que** les moyens d'accrochage comprennent au niveau de chaque verrou d'accrochage (20) du préhenseur (6), un capteur d'effort (26) pour vérifier à l'amorçage du soulèvement de la palette (1) par les préhenseurs (6), que chaque verrou d'accrochage (20) dans son orientation de verrouillage est bien accroché au longeron (11) correspondant.

14. Ensemble selon la revendication 13, **caractérisé en ce que** chaque capteur d'effort (26) comprend un détecteur de proximité (26a) à sortie analogique associé à un système de rondelles Belleville (27) dont la compression en fonction de la charge soulevée par un préhenseur (6), génère un déplacement relatif entre une cible (28) portée par le système de rondelles Belleville (27) et le détecteur de proximité (26a), l'amplitude du signal en sortie dudit détecteur de proximité (26a) dépendant directement de la masse soulevée.

15. Système de chargement et de stockage équipé d'une structure support (7) destinée à stocker des palettes (1) chargées ou non, d'un manipulateur comportant des préhenseurs (6) permettant de saisir, de déplacer, d'orienter et de déposer les palettes (1) dans des positions déterminées sur la structure support (7), ledit système de chargement et de stockage comprenant un ensemble de verrouillage conforme à l'une quelconque des revendications 1 à 14.

16. Véhicule routier ou ferroviaire ou container équipé d'une structure support (7) destinée à stocker et à transporter des palettes (1) chargées ou non, d'un manipulateur comportant des préhenseurs (6) permettant de saisir, de déplacer, d'orienter et de déposer les palettes (1) dans des positions déterminées sur la structure support (7), ledit véhicule comprenant un ensemble de verrouillage conforme à l'une quelconque des revendications 1 à 14.

## Patentansprüche

1. Verriegelungsanordnung zum Fixieren einer Palette (1) auf einer Trägerstruktur (7) in einer bestimmten Position, wobei die Anordnung Steuerungs- bzw. Aktivierungsmittel zum Aktivieren und Deaktivieren der Verriegelung der Palette (1) umfasst, **dadurch gekennzeichnet, dass** die Aktivierungsmittel folgendes umfassen:
- bewegliche und einziehbare Bolzen (12), die verschiebbar in Längsträgern (11) einer Palette (1) gelagert sind, wobei die Bolzen (12) geeignet sind, in die in der Tragkonstruktion (7) vorgesehene Aufnahmen (7b) einzugreifen,
- Antriebe, die in den Längsträgern (11) der Palette (1) montiert sind, um die Bolzen (12) zwischen einer eingefahrenen Position, die der Entriegelung entspricht, und einer seitlich vorstehenden Position an den Längsträgern (11), die der Verriegelung entspricht, zu bewegen, und
- abnehmbare Betätigungsmittel, die auf oder in der Palette (1) in einer Position platziert werden können, die mechanisch mit den Antriebselementen zur Steuerung der Bewegung der Bolzen (12) kooperiert,
und dass mehrere Bolzen (12) in der Nähe jedes Endes der Längsträger (11) angeordnet sind, wobei jeder dieser Bolzen einzeln gleitend montiert ist und in einer vorstehenden Position mittels einer Feder vorgespannt ist.

2. Einheit nach Anspruch 1, **dadurch gekennzeichnet, dass** die Betätigungsmittel von zwei Greifern (6) getragen werden, die an einem automatisierten Manipulator angelenkt sind, der sich entlang der Tragkonstruktion (7) bewegt, wobei die Greifer (6) Greifmittel zum Greifen der Palette (1) an ihren Längsträgern (11) umfassen und um dem automatisierten Manipulator zu ermöglichen, die Palette (1) in eine definierte Ladeposition auf der Tragkonstruktion (7) zu bewegen, auszurichten und abzulegen.

3. Einheit nach Anspruch 2, **dadurch gekennzeichnet, dass** die Betätigungsmittel in einer vorstehenden Position auf einer Unterseite (13) jedes Greifers (6) angeordnet sind, wobei die Unterseite (13) beim Befestigen mit einer Oberseite (14) eines Längsträgers (11) in Kontakt kommt und der Längsträger (11) auf seiner Oberseite (14) eine Öffnung (15) zur Aufnahme der Betätigungsmittel aufweist.

4. Einheit nach Anspruch 3, **dadurch gekennzeichnet, dass** die Betätigungsmittel ein Stellglied (16) vom Typ eines Hydraulikzylinders mit einer Steuerstange (17) umfassen, deren freies Ende (17a) mit den Antriebselementen zusammenwirken kann.

5. Einheit nach einem der Ansprüche 1 bis 4, **dadurch gekennzeichnet, dass** die Betätigungsmittel so angeordnet und dimensioniert sind, dass sie integral in den Längsträgern (11) aufgenommen werden.

6. Einheit nach einem der Ansprüche 1 bis 5, **dadurch gekennzeichnet, dass** die Bolzen (12) in einem Block (35) gelagert sind, der zwischen einer Ver- und Entriegelungsstellung und umgekehrt und in der Nähe jedes Endes der Längsträger (11) verschiebbar gelagert ist.

7. Einheit nach Anspruch 5, **dadurch gekennzeichnet, dass** die Antriebselemente einen beweglichen und mit einem Gewinde versehenen Gabelkopf (30) umfassen, der übersetzbar im Längsträger (11) und am Gewinde einer den Gabelkopf durchquerenden und sich auf jeder Seite des Gabelkopfs (30) in Bewegungsrichtung erstreckenden Verbindungswelle (31) eingreift, wobei sich eine Übersetzungs- bzw. Translationsbewegung somit in eine Rotationsbewegung der Verbindungswelle (31) verwandelt, ein im Gabelkopf (30) zur Aufnahme des freien Endes (17a) der Steuerstange (17) vorgesehener Verankerungsraum (30a), wobei sich der Gabelkopf (30) unter der Wirkung der Steuerstange (17) bewegt, wobei die Verbindungswelle (31) Enden aufweist, die jeweils einen Nocken (33) tragen, der mit der Verbindungswelle (31) drehbar befestigt und mit Bolzen (12) kinematisch verbunden ist, um eine Drehbewegung der Verbindungswelle (31) in eine Querverschiebungs- bzw. Translationsbewegung der Bolzen (12) umzuwandeln.

8. Einheit nach Anspruch 7, **dadurch gekennzeichnet, dass** jeder Nocken (33) drehbar an der Verbindungswelle (31) befestigt und an einem Block (35) mit Bolzen (12) angelenkt ist.

9. Einheit nach Anspruch 6, **dadurch gekennzeichnet, dass** die Antriebselemente einen Gabelkopf (30) umfassen, der im Längsträger (11) verschiebbar ist und mit mindestens einer Steuerstange (40) verbunden ist, die sich auf jeder Seite des Gabelkopfes (30) in Bewegungsrichtung des Gabelkopfes (30) erstreckt, eine Translationsbewegung des Gabelkopfes (30), wodurch die Steuerstange (40) translatorisch angetrieben wird, wobei ein in dem Gabelkopf (30) vorgesehenes Ankergehäuse (30a) zur Aufnahme des freien Endes (17a) der Steuerstange (17) vorgesehen ist, wobei sich der Gabelkopf (30) also unter der Wirkung der Steuerstange (17) bewegt und wobei die Steuerstange (40) Enden aufweist, die jeweils ein Führungselement (41) tragen, das in Translation mit der Steuerstange (40) fixiert und kinematisch mit Stiften (12) verbunden ist, um die Translationsbewegung des Führungselements (41) in eine Verschiebung der Stifte (12) in eine orthogonal zu der Translationsbewegung verlaufenden Richtung umzuwandeln.

10. Einheit nach einem der Ansprüche 6 bis 9, **dadurch gekennzeichnet, dass** jeder Bolzen (12) einzeln verschiebbar gelagert und in einer vorstehenden Position des Blocks (35) über eine Feder vorgespannt ist, um die Feder zusammenzudrücken, wenn sich der Block (35) in Richtung seiner seitlich vorstehenden Verriegelungsposition des Längsträgers (11) bewegt und wenn der entsprechende Bolzen (12) auf der Trägerstruktur (7) zum Anschlag kommt.

11. Einheit nach Anspruch 2, **dadurch gekennzeichnet, dass** die Befestigungsmittel umfassen:
- einen Zentrierstift (18), der von der Unterseite (13) des Greifers (6) vorsteht und in ein Zentrierloch (19) eingreift, das auf der Oberseite (14) eines Längsträgers (11) angebracht ist, und
- zwei Verriegelungen (20) vom Typ Drehriegel bzw. Twist-Lock, die sich auf beiden Seiten des Zentrierstiftes (18) befinden und von einem Stellglied (21) und einer Verbindungsstange (23), die in den Greifer (6) integriert sind, geschwenkt werden, um die besagten Verriegelungsschlösser (20) von einer Freigabeposition zu einer Verriegelungsposition der Palette (1) und umgekehrt zu schwenken, wobei die Verriegelungsschlösser (20) dazu bestimmt sind, in Verriegelungsöffnungen (24) einzugreifen, die an der Oberfläche (14) des Längsträgers (11) vorgesehen sind.

12. Einheit nach Anspruch 11, **dadurch gekennzeichnet, dass** der Greifer (6) einen induktiven Sensor (25) zum Erfassen des Kontakts der Oberseite (14) des Längsträgers (11) mit der Unterseite (13) des Greifers (6) umfasst, wenn der Zentrierstift (18) vollständig in das Zentrierloch (19) eingreift.

13. Einheit nach Anspruch 11 oder 12, **dadurch gekennzeichnet, dass** die Befestigungsmittel an jedem Befestigungsbolzen (20) des Greifers (6) einen Kraftsensor (26) umfassen, um zu überprüfen, wann das Anheben der Palette (1) durch die Greifer (6) eingeleitet wird, dass jeder Befestigungsbolzen (20) in seiner Verriegelungsausrichtung ordnungsgemäß an dem entsprechenden Längsträger (11) befestigt ist.

14. Einheit nach Anspruch 13, **dadurch gekennzeichnet, dass** jeder Kraftsensor (26) einen Näherungssensor (26a) mit Analogausgang umfasst, der einem Tellerfedersystem (27) zugeordnet ist, dessen Kompression in Abhängigkeit von der von einem Greifer (6) angehobenen Last eine relative Verschiebung zwischen einer vom Tellerfedersystem (27) getragenen Zielposition (28) und dem Näherungssensor (26a) erzeugt, wobei die Amplitude des Ausgangssignals des Näherungssensors (26a) direkt von der angehobenen Masse abhängt.

15. Lade- und Lagersystem, das mit einer Tragkonstruktion (7) zum Lagern von beladenen oder entladenen Paletten (1), einem Manipulator mit Greifern (6) zum Greifen, Bewegen, Ausrichten und Ablegen der Paletten (1) in vorbestimmten Positionen auf der Tragkonstruktion (7) ausgestattet ist, wobei das Lade- und Lagersystem eine Verriegelungseinheit umfasst, die einem der Ansprüche 1 bis 14 entspricht.

16. Straßen- oder Schienenfahrzeug oder Container, ausgestattet mit einer Tragkonstruktion (7) zum Lagern und Transportieren von beladenen oder nicht beladenen Paletten (1), einem Manipulator mit Greifern (6), die es ermöglichen, die Paletten (1) in bestimmten Positionen auf der Tragkonstruktion (7) zu greifen, zu bewegen, zu orientieren und abzusetzen, wobei das Fahrzeug eine Verriegelungseinheit nach einem der Ansprüche 1 bis 14 umfasst.

## Claims

1. A locking assembly for securing a pallet (1) on a support structure (7) in a predetermined position, said assembly comprising activation means for activating and deactivating the locking of the pallet (1), **characterized in that** the activation means include:
- studs (12) that are movable and retractable, mounted sliding within side members (11) of a pallet (1), said studs (12) being capable of engaging in housings (7b) provided in the support structure (7),
- drive members mounted in the side members (11) of the pallet (1) to move said studs (12) between a retracted position corresponding to unlocking and a laterally protruding position on the side members (11) corresponding to locking, and
- removable actuation means, suitable for being arranged on or within the pallet (1), in a position in which they mechanically engage with the drive members in order to control the movement of the studs (12),
and **in that** several stud (12) are located in the vicinity of each end of the side members (11), each of said studs being individually mounted sliding and preloaded into a protruding position by means of a spring.

2. The assembly according to claim 1, **characterized in that** the actuation means are carried by two grippers (6), articulated on an automated manipulator moving along the support structure (7), said grippers (6) comprising attachment means for gripping the pallet (1) along its longitudinal side members (11) and allowing the automated manipulator to move, orient and deposit the pallet (1) in a predetermined loading position on the support structure (7).

3. The assembly according to claim 2, **characterized in that** the actuation means are arranged in a protruding manner on a lower face (13) of each gripper (6), said lower face (13) coming into contact with an upper face (14) of a side member (11) during its attachment and said side member (11) presenting an opening (15) on its upper face (14) for receiving said actuation means.

4. The assembly according to claim 3, **characterized in that** the actuation means comprise an actuator (16), of the hydraulic cylinder type, having a control rod (17) whose free end (17a) is designed to cooperate with the drive members.

5. The assembly according to any of claims 1 to 4, **characterized in that** the actuation means are arranged and dimensioned in order to be wholly received within the side members (11).

6. The assembly according to any of claims 1 to 5, **characterized in that** the studs (12) are mounted in a block (35), which is mounted sliding between a locking and unlocking position and vice versa and in the vicinity of each end of the side members (11).

7. The assembly according to claim 5, **characterized in that** the drive members comprise a tapped mobile yoke (30) in translation within the side member (11) and engaged with the thread of a connecting rod (31) passing through the yoke (30) and extending on each side of said yoke (30) in the direction of movement of said yoke (30), a translational movement of the yoke (30) thereby being transformed into a rotational movement of the connecting rod (31), an anchor recess (30a) formed within the yoke (30) and designed to receive the free end (17a) of the control rod (17), said yoke (30) thereby moving under the action of the control rod (17), said connecting rod (31) presenting ends each carrying a cam (33), rotationally integral to said connecting rod (31) and being kinematically connected to studs (12) for converting a rotational movement of the connecting rod (31) into a transversal translational movement of said studs (12).

8. The assembly according to claim 7, **characterized in that** each cam (33) is rotationally integral to the connecting rod (31) and hinged to a block (35) carrying studs (12).

9. The assembly according to claim 6, **characterized in that** the drive members comprise a yoke (30) movable in translation within the side member (11) and connected to at least one control spindle (40) extending from each side of said yoke (30) in the direction of movement of said yoke (30), a translational movement of the yoke (30) thereby causing the translation of said control spindle (40), an anchor recess (30a) formed within the yoke (30) being designed to receive the free end (17a) of the control rod (17), said yoke (30) thus moving under the action of the control rod (17), said control spindle (40) presenting ends each carrying a guide member (41) translationally integral to said control spindle (40) and kinematically connected to studs (12) for transforming the translational movement of the guide member (41) into movement of said studs (12) in a direction orthogonal to said translational movement.

10. The assembly according to any of claims 6 to 9, **characterized in that** each stud (12) is individually mounted sliding and preloaded into a position protruding from the block (35) by means of a spring, such as to compress said spring when the block (35) is moved towards its locking position, laterally protruding from the side member (11), and when the corresponding stud (12) abuts against the support structure (7).

11. The assembly according to claim 2, **characterized in that** the attachment means comprise:
- a centering pin (18) protruding from the lower face (13) of the gripper (6), designed to engage in a centering hole (19) formed on the upper face (14) of a side member (11), and
- two snap locks (20) of the twistlock kind, located on either side of the centering pin (18) and driven by means of an actuator (21) and a spindle (23) integrated into the gripper (6) in order to rotate said snap locks (20) from a release orientation to a locked orientation of the pallet (1) and vice versa, said snap locks (20) being designed to engage in attachment openings (24) formed on the upper face (14) of the side member (11).

12. The assembly according to claim 11, **characterized in that** the gripper (6) comprises an inductive sensor (25) for detecting the contact of the upper face (14) of the side member (11) with the lower face (13) of the gripper (6) when the centering pin (18) is fully engaged in the centering hole (19).

13. The assembly according to claim 11 or claim 12, **characterized in that** the attachment means comprise at each snap lock (20) of the gripper (6), a load sensor (26) to verify, at the start of the lifting of the pallet (1) by the grippers (6), that each snap lock (20), in its locking orientation, is attached to the corresponding side member (11).

14. The assembly according to claim 13, **characterized in that** each load sensor (26) comprises an analog output proximity sensor (26a) associated with a Belleville washer system (27), the compression of which, as a function of the load being raised by a gripper (6), results in a relative displacement between a target (28), supported by the Belleville washer system (27), and the proximity sensor (26a), the amplitude of the output signal from said proximity sensor (26a) being directly dependent upon the mass being raised.

15. A loading and storage system equipped with a support structure (7) for storing loaded or unloaded pallets (1), with a manipulator with grippers (6) for gripping, moving, orienting and depositing pallets (1) in predetermined positions on the support structure (7), said loading and storage system comprising a locking assembly according to any of claims 1 to 14.

16. A road or rail vehicle or container equipped with a support structure (7) for storing and transporting loaded or unloaded pallets (1), with a manipulator with grippers (6) for gripping, moving, orienting and depositing pallets (1) in predetermined positions on the support structure (7), said vehicle comprising a locking assembly according to any of claims 1 to 14.
